# EUROPEAN PATENT SPECIFICATION

(11) **EP 2 498 238 B1**
(45) Date of publication and mention of the grant of the patent: **07.02.2018**
(21) Application number: 11182694.7
(22) Date of filing: 26.09.2011
(51) Int. Cl.: A01K 1/035, G09B 7/02, G09B 19/00, A01K 15/02, A01K 1/03

(54) **System and method for cognitive assessment and training of an animal**
System und Verfahren zum kognitiven Beurteilen und Trainieren eines Tieres
Système et procédé d'évaluation cognitive et entraînement d'un animal

(30) Priority: 24.09.2010 US 889725
(43) Date of publication of application: 12.09.2012
(73) Proprietor: CanCog Technologies Inc., Toronto, ON M5A4K2 (CA)
(72) Inventor: Araujo, Joseph, Toronto, Ontario ONM5A4K2 (CA)
(74) Representative: Purdylucey Intellectual Property

(56) References cited:
- GB-A- 329 155
- US-A- 6 041 737
- US-A1- 2006 054 102
- US-B1- 7 011 046

## Description

### BACKGROUND OF THE INVENTION

### FIELD OF THE INVENTION

Embodiments of the invention described herein pertain to cognitive assessment and training of an animal. More particularly, the invention is an apparatus for training and objectively assessing learning-related cognitive functions in animals based on visual stimulus.

### DESCRIPTION OF THE RELATED ART

Animal training is often undertaken by both professional trainers and animal owners. Various techniques are used to train the animal, taking into account its innate capability for learning. Training techniques are typically aimed at increasing or reducing the frequency of specific behaviors through the use of operant conditioning, including reinforcement and punishment. Specialized training for an animal may be a costly investment.

Evaluation of the cognitive status of an animal is performed in a veterinary context, such as for the diagnosis of cognitive impairment. However, cognitive assessment is typically based on owner-reported behavioral signs of disease rather than objective or measurable parameters.

Researchers have evaluated the cognitive abilities of dogs in a laboratory setting. However, the standard laboratory evaluation procedure spans over two months, with daily testing sessions to complete the assessment. These procedures are not suitable for home or veterinary evaluation in a clinical setting.

At present and with the exception of laboratory studies, there are no objective methods for the assessment of learning-related cognitive functions in animals, such as domesticated dogs. Evaluation of the learning abilities of an animal is based on subjective evaluation of the tester, Master or attending Veterinarian, rather than objectively measurable parameters.

US Publication No. 2006/0054102 A1 to Haley Tracey J., ("D1") discloses an animal shelter that provides indoor and outdoor accommodation for an animal that includes an insulated, moisture impervious floor panel with a controllable heat producing element therein. The shelter includes a first and a second compartment that respectively hold a supply of food and water and each have an open top tray portion, located within the shelter, which is accessible by an animal located in the shelter.

US Patent No. 6,041,737 to Hennigan Michael Ross, ("D2") discloses a cat litter box with a sensitive scale under the litter box which constantly weighs the litter box and outputs the updated weights of the litter box to a computer processing unit which analyzes the data and when it detects a weight difference which would indicate that the cat has either defecated or urinated in the litter box the processing unit signals a treat dispenser to dispense a treat for the cat. The dispenser may dispense an assortment of treats such as toys to play with, treats to eat.

To overcome the problems and limitations described above there is a need for a system and method for cognitive assessment and training of an animal.

### SUMMARY OF THE INVENTION

A system and method for cognitive assessment and training of an animal is provided, including systems and methods for cognitive assessment and training of domesticated pets, such as cats and dogs. Objective assessment of cognition as well as regimented training protocols are used to achieve homogeneity, objectivity and speed. A complete assessment of cognitive ability of an animal subject may be completed in a limited number of sessions of a reasonable duration.

The system and method for cognitive assessment and training of an animal described herein is suitable for training, research and evaluation purposes. It may be used in many settings, such as universities, public and private research institutions, veterinary hospitals and clinics, animal training institutions, military and police training operations, home pet training, as well as any other setting in which efficient cognitive assessment and training is desirable. The systems and methods for cognitive assessment and training may be used with or without the direct involvement of a professional, such as a researcher or a trainer. Embodiments described are useful for both training purposes and for assessment purposes, including assessment for suitability as a participant in a specialized training program.

One or more embodiments of the apparatus and method for cognitive assessment and training of an animal are directed to a method for cognitive assessment and training of an animal subject. The animal subject may be any animal subject, including a domesticated animal, such as a household animal, a companion animal, a service animal, or any other type of domesticated animal. In one or more embodiments of the method for cognitive assessment and training, the animal subject is a canine.

The method for cognitive assessment and training includes the step of placing a subject in a testing environment. In one or more embodiments, the testing environment is a subject chamber of a cognitive assessment and training apparatus.

The method for cognitive assessment and training of an animal subject further includes the step of performing at least one cognitive assessment and training session that includes a plurality of trials.

Each trial includes the step of preparing a trial assembly at a first level of difficulty. A trial assembly may include at least one stimuli and a reward. The trial assembly may be prepared using a randomized process. A target stimulus selected from the at least one stimulus is associated with the reward. Each trial further includes the step of allowing the subject access to the trial assembly. The trial further includes the step of determining a correct response from the subject. The trial further includes the step of allowing the subject to access the reward associated with the correct response. The trial further includes the step of advancing a difficulty of the plurality of trials to a next level when a learning criterion is reached.

The method for cognitive assessment and training further includes the step of generating at least one cognitive assessment score based on the plurality of trials and the at least one cognitive assessment and training session. In one or more embodiments of the method for cognitive assessment and training, the cognitive assessment score includes a learning rate score. The cognitive assessment score may include a recommendation regarding acceptance of the subject into a specialized training program.

In one or more embodiments of the method for cognitive assessment and training, the cognitive assessment score is based on at least one cognitive assessment and training session of between about 10 minutes to about 180 minutes. In one or more embodiments of the method for cognitive assessment and training, the cognitive assessment score is based on two to three cognitive assessment and training sessions of between about 30 minutes to 60 minutes.

One or more embodiments of the method for cognitive assessment and training further include the step of failing to deliver a reward when an incorrect response from the subject is determined. One or more embodiments of the method for cognitive assessment and training further include the step of presenting a negative reward when an incorrect response from the subject is determined.

One or more embodiments of the method for cognitive assessment and training include the step of performing at least one trial at a preliminary level, where the subject acclimates to the testing environment.

One or more embodiments of the method for cognitive assessment and training include the step of performing at least one trial at a reward level. The correct response in a reward level trial includes acknowledging by the subject of a presented reward.

One or more embodiments of the method for cognitive assessment and training include the step of performing at least one trial at an object level. The correct response in an object level trial includes selecting the target stimulus presented to obtain the reward.

One or more embodiments of the method for cognitive assessment and training include the step of performing at least one trial at a discrimination level. The correct response in a discrimination level trial includes selecting the target stimulus from two or more presented stimuli.

One or more embodiments of the method for cognitive assessment and training include the step of performing at least one trial at a reversal level. The target stimulus in the reversal level was previously unrewarded, and a different stimuli selected from the two or more presented stimuli was previously rewarded. The correct response in a reversal level trial includes selecting the target stimulus from two or more presented stimuli.

One or more embodiments of the method for cognitive assessment and training are directed to evaluating the cognitive status of a dog for medical reasons, such as for determining medical treatment, nutritional needs, long-term care, short-term care, medication, or any other reason for evaluating the cognitive status of a dog for medical reasons.

One or more embodiments of the apparatus and method for cognitive assessment and training of an animal are directed to an apparatus for cognitive assessment and training of an animal subject. The animal subject may be any animal subject, including a domesticated animal, such as a household animal, a companion animal, a service animal, or any other type of domesticated animal. In one or more embodiments of the apparatus for cognitive assessment and training, the animal subject is a canine or feline.

The apparatus for cognitive assessment and training includes a plurality of side panels configured to detachably couple to form a testing chamber configured to reduce at least one external stimuli. In one or more embodiments, the apparatus for cognitive assessment and training further includes an adjustable subject platform configured to movably couple with the plurality of side panels. A height of the adjustable subject platform is adjustable along a vertical axis of movement.

The apparatus for cognitive assessment and training further includes a trial assembly configured to display a plurality of stimuli. The stimuli may be displayed through a visual, auditory, olfactory, or other means detectable by a subject. At least one target stimuli selected from the plurality of stimuli is associated with a reward. The trial assembly is further configured to allow for replacement and/or rearrangement of the plurality of stimuli and changing of the target object associated with the reward.

In one or more embodiments of the apparatus for cognitive assessment and training, the trial assembly includes a computerized display configured to display the plurality of stimuli on the computerized display. The apparatus further includes a reward dispenser configured to dispense a reward to the subject.

In one or more embodiments of the apparatus for cognitive assessment and training, the trial assembly includes a tray with a plurality of wells configured to receive the reward. The plurality of stimuli include a plurality of objects each configured for placement over an individual well selected from the plurality of wells to cover the individual well. The target stimuli includes a target object selected for placement over a well containing the reward.

The apparatus for cognitive assessment and training further includes a divider assembly configured to detachably couple with the plurality of side panels to divide the testing chamber into a stimuli chamber and a subject chamber. The stimuli chamber is configured to receive the trial assembly. In one or more embodiments of the apparatus for cognitive assessment and training, the divider assembly includes a plurality of bars and/or a transparent barrier configured to detachably couple with plurality of bars. The transparent barrier is further configured to move between a first position and a second position. The transparent barrier acts as a complete physical barrier between the subject chamber and the stimuli chamber in the first position. The subject has access to the stimuli chamber through the plurality of bars when the transparent barrier is in the second position. In one or more embodiments, a subject may be trained to remain in the subject area such that the divider assembly is unnecessary.

One or more embodiments of the apparatus and method for cognitive assessment and training of an animal are directed to an apparatus for cognitive assessment and training of an animal subject. The animal subject may be any animal subject, including a domesticated animal, such as a household animal, a companion animal, a service animal, or any other type of domesticated animal. In one or more embodiments of the apparatus for cognitive assessment and training, the animal subject is a canine.

The apparatus for cognitive assessment and training further may include a subject chamber configured to receive a subject and to reduce at least one external stimuli.

The apparatus for cognitive assessment and training further includes a reward dispenser configured to dispense a reward in response to a reward signal.

The apparatus for cognitive assessment and training further includes a display configured to display one or more stimuli. The display is configurable to face the subject chamber. The stimuli may be displayed through a visual, auditory, olfactory, or other means detectable by a subject.

The apparatus for cognitive assessment and training further includes at least one processor.

The apparatus for cognitive assessment and training further includes a computer-readable medium encoded with computer executable instructions. Execution of the computer-executable instructions by the at least one processor causes the apparatus to display a plurality of randomized trials to the subject on the display. The plurality of randomized trials include at least one stimuli associated with the reward. Execution of the computer-executable instructions by the at least one processor further causes the apparatus to determine a response from the subject for at least one of the plurality of randomized trials. Execution of the computer-executable instructions by the at least one processor further causes the apparatus to transmit a reward signal to the reward dispenser to dispense the reward when a correct response is determined. Execution of the computer-executable instructions by the at least one processor further causes the apparatus to generate at least one cognitive assessment score based on the plurality of trials and the at least one cognitive assessment and training session.

A level of the plurality of randomized trials displayed to the subject is advanced when a learning criterion is reached. In one or more embodiments of the apparatus for cognitive assessment and training, where the level of the plurality of randomized trials is advanced through a series of levels based on the learning criterion. In one or more embodiments, the learning criterion is an indication of the stabilization of cognitive performance of the subject.

The series of levels includes a preliminary level, where the subject acclimates to a testing environment. The series of levels further includes at least one reward level, where the correct response includes acknowledging the reward presented. The series of levels further includes at least one object level, where the correct response includes selecting a stimulus presented to obtain the reward. The series of levels further includes at least one discrimination level, where the correct response includes selecting a target stimulus associated with the reward from two or more presented stimuli. The series of levels further includes at least one trial at a reversal level, where the correct response includes selecting a target stimulus associated with the reward from two or more presented stimuli. In a discrimination level trail, the target stimulus was previously unrewarded, and a different stimuli selected from the two or more presented stimuli was previously rewarded.

In one or more embodiments of the apparatus for cognitive assessment and training, the apparatus for cognitive assessment and training further includes a negative reward mechanism configured to deliver a negative reward to the subject in response to a negative reward signal. The computer-executable instructions further include transmitting a negative reward signal to the negative reward mechanism when an incorrect response is determined.

### BRIEF DESCRIPTION OF THE DRAWINGS

The above and other aspects, features and advantages of the invention will be more apparent from the following more particular description thereof, presented in conjunction with the following drawings wherein:
**FIG. 1** illustrates a perspective view of a cognitive assessment and training apparatus for in accordance with one or more embodiments of systems and methods for cognitive assessment and training of an animal.
**FIG. 2** illustrates a cross sectional view of a cognitive assessment and training apparatus in accordance with one or more embodiments of systems and methods for cognitive assessment and training of an animal.
**FIG. 3** illustrates a trial assembly in accordance with one or more embodiments of systems and methods for cognitive assessment and training of an animal.
**FIG. 4** illustrates an automated stimulus system in accordance with one or more embodiments of systems and methods for cognitive assessment and training of an animal.
**FIG. 5** illustrates a method for cognitive assessment and training in accordance with systems and methods for cognitive assessment and training of an animal.
**FIG. 6** illustrates a general-purpose computer and peripherals that when programmed as described herein may operate as a specially programmed computer capable of implementing one or more methods, apparatus and/or systems of the solution.

### DETAILED DESCRIPTION

A system and method for cognitive assessment and training of an animal will now be described. In the following exemplary description numerous specific details are set forth in order to provide a more thorough understanding of embodiments described therein. It will be apparent, however, to an artisan of ordinary skill that the present invention may be practiced without incorporating all aspects of the specific details described. In other instances, specific features, quantities, or measurements well known to those of ordinary skill in the art have not been described in detail so as not to obscure features, quantities or measurements described. Although examples of embodiments are set forth herein, the claims, and the full scope of any equivalents, are what define the metes and bounds of the invention.

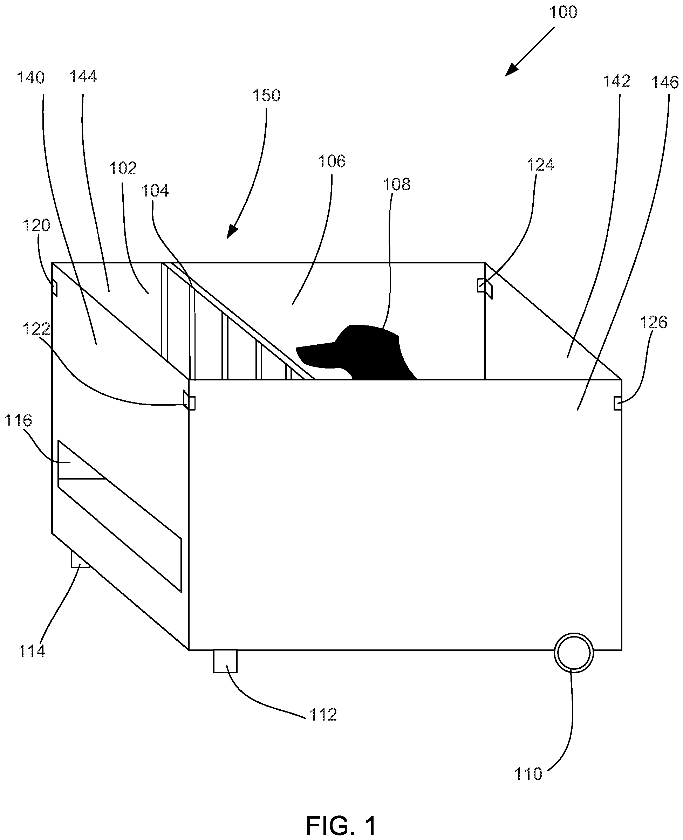

**FIG. 1** illustrates a perspective view of a cognitive assessment and training apparatus in accordance with one or more embodiments of systems and methods for cognitive assessment and training of an animal. Cognitive assessment and training apparatus 100 includes testing chamber 150. Testing chamber 150 is divided by divider assembly 104 into stimuli chamber 102 and subject chamber 106.

Subject chamber 106 is designed to hold subject 108. Subject 108 is at least partially isolated from an external environment when subject 108 is held in subject chamber 106. Isolation includes physical restraint and/or sensory isolation. As used herein, the term sensory isolation refers to the blocking of sound, vision, smell, climate, and other environmental factors. In one or more embodiments, cognitive assessment and training apparatus 100 further includes a background sensory noise generator. The background sensory noise generator generates background sensory noise, such as background sound, light, or other sensory noise that further isolates the environment inside subject chamber 106 from the external environment.

Subject 108 is an animal subject, including a domesticated animal, such as a household animal, a companion animal, a service animal, or any other type of domesticated animal. In one or more embodiments of the apparatus for cognitive assessment and training, the animal subject is a canine. The animal subject may also be selected from other animals, such as dogs, horses, birds and cats, or any other animal. The size of subject chamber 106 is suitable for holding the subject 108 in a natural position, such as a natural standing position of subject 108. Subject 108 is positioned in subject chamber 106 to face stimuli chamber 102. Subject chamber 106 may include one or more mechanisms to focus the attention of subject 108 toward stimuli chamber 102, including light, restraints on movement, opaque panels, leashes, straps, or any other device.

Divider assembly 104 includes at least one barrier between subject chamber 106 and stimuli chamber 102. The at least one barrier may be partial, complete, visual and/or physical. A visual barrier occludes the view of subject 108 into stimuli chamber 102. A physical barrier prevents subject 108 from physically entering stimuli chamber 102. The at least one barrier is metal, wood, plastic, glass, Plexiglas, acrylic, or any other suitable material for providing a visual and/or physical barrier that is complete or partial. Each of the at least one barrier may be designed to be movable during a cognitive assessment and training session. Alternatively, one or more of the at least one barrier is designed to be left in place during a cognitive assessment and training session. Cognitive assessment and training apparatus 100 may include a track, guide, hinge, and/or any other component for facilitating the insertion and removal of at least one barrier of divider assembly 104.

In one or more embodiments divider assembly 104 includes a barrier including one or more vertical or horizontal bars that prevent subject 108 from completely entering stimuli chamber 102, but allow subject 108 to reach one or more limbs into stimuli chamber 102 to interact with objects in stimuli chamber 102. The position of the vertical or horizontal bars may be adjustable to customize cognitive assessment and training apparatus 100 to a specific subject 108.

In one or more embodiments, divider assembly 104 includes a transparent barrier that acts as a complete physical barrier but allows subject 108 to visually observe stimuli chamber 102. The transparent barrier is further configured to move between a first position and a second position. The transparent barrier acts as a complete physical barrier between subject chamber 106 and stimuli chamber 102 in the first position. The subject has access to stimuli chamber 102 through the plurality of bars when the transparent barrier is in the second position.

Cognitive assessment and training apparatus 100 includes at least one side panel 140-146. Cognitive assessment and training apparatus 100 further includes base panel (not shown), and optionally, top panel (not shown). Side panels 140-146, base panel, and optional top panel are configured to assemble to form testing chamber 150, including subject chamber 106 and stimuli chamber 102. Side panels 140-146, base panel, and optional top panel are composed of wood, plastic, or any other suitable material. In one or more embodiments, one or more side panels 140-146 have an opaque section, such that at least one portion of subject chamber 106 and/or stimuli chamber 102 is opaque.

Side panels 140-146, base panel and optional top panel may be fabricated from the same material or different materials. In one or more embodiments, optional top panel is permeable light and/or air. Side panels 140-146, base panel and optional top panel may be assembled from one or more separate manufactured pieces. Side panels 140-146, base panel and optional top panel may be fixedly coupled or detachably coupled for ease of transportation.

In one or more embodiments, cognitive assessment and training apparatus 100 is foldable for ease of transportation. Cognitive assessment and training apparatus 100 may include one or more connectors 120-126 for securing side panels 140-146, base panel, and optional top panel to form stimuli chamber 102 and subject chamber 106. Connectors 120-126 are hinges, clasps, screws, bolts, pegs, rails, inserts, or any other connector. At least a portion of connectors 120-126 may be molded, glued, or otherwise affixed to at least one of side panels 140-146, base panel and/or optional top panel.

Stimuli chamber 102 is accessible via stimuli chamber access port 116. Stimuli chamber access port 116 provides access to stimuli chamber 102. Stimuli chamber access port 116 may be used by an operator to manipulate object in stimuli chamber 102 in accordance with systems and methods for cognitive assessment and training of an animal. The operator may be a trainer, laboratory worker, researcher, veterinarian, assistant, owner, or any other person with or without special training in cognitive assessment or training. In one or more embodiments, at least one of side panels 140-146 and divider assembly 104 is configured block subject 108 from viewing, hearing, or otherwise sensing the operator's movements, expressions, or other characteristics.

Cognitive assessment and training apparatus 100 may also include at least one wheel 110 and/or at least one support leg 112-114. Wheel 110 allows for ease of transportation, enhancing the portability of cognitive assessment and training apparatus 100.

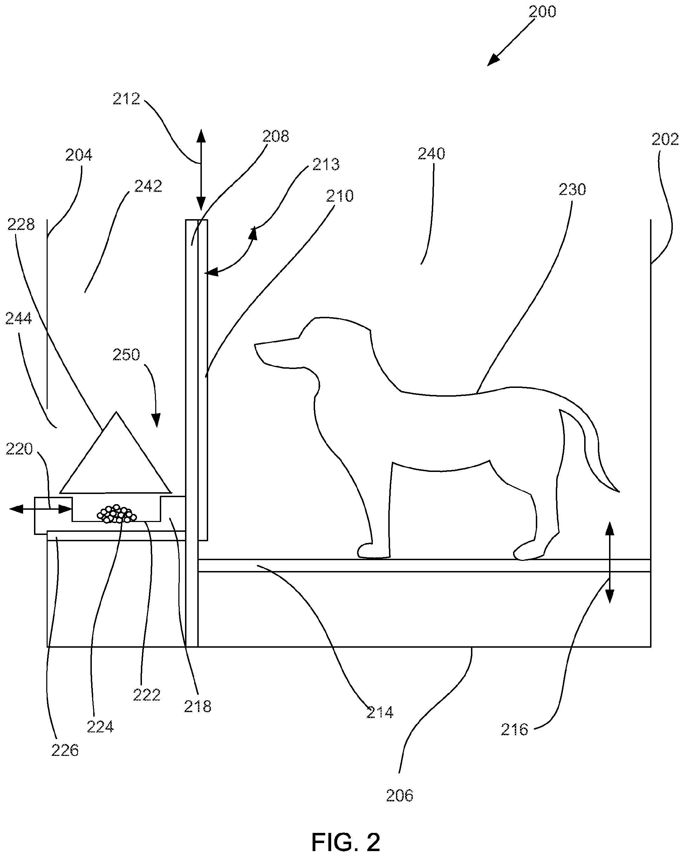

**FIG. 2** illustrates a cross sectional view of a cognitive assessment and training apparatus in accordance with one or more embodiments of systems and methods for cognitive assessment and training of an animal. Cognitive assessment and training apparatus 200 includes stimuli chamber 242 and subject chamber 240. Stimuli chamber 242 and subject chamber 240 are divided by divider 208.

Cognitive assessment and training apparatus 200 includes at least one side panel 202-204. Cognitive assessment and training apparatus 200 further includes base panel 206 (not shown). Side panels 202-204 and base panel 206 are configured to assemble to form a chamber, including subject chamber 240 and stimuli chamber 242. Side panels 202-204 and base panel 206 are composed of wood, plastic, or any other suitable material. In one or more embodiments, one or more side panels 202-204 have one or more opaque sections, such that at least one portion of subject chamber 240 and/or stimuli chamber 242 is opaque.

Side panels 202-204 and base panel 206 may be fabricated from the same material or different materials. Side panels 202-204 and base panel 206 may be assembled from one or more separate manufactured pieces. Furthermore, side panels 202-204 and base panel 206 may be fixedly coupled or detachably coupled for ease of transportation. In one or more embodiments, cognitive assessment and training apparatus 200 includes a flexible or rigid optional top panel coupled with side panels 202-204.

In one or more embodiments, cognitive assessment and training apparatus 200 may be folded or disassembled by hand for ease of transportation and/or storage. Cognitive assessment and training apparatus 200 may include one or more connectors for securing side panels 202-204 and base panel 206, such as hinges, clasps, screws, bolts, pegs, rails, inserts, or any other connector. The connectors may be configured for manual assembly and disassembly. At least a portion of the connectors may be molded into at least one of side panels 202-204 and base panel 206.

Divider 208 acts as a partial physical barrier between subject chamber 240 and stimuli chamber 242. Divider 208 includes one or more openings, preventing the body of subject 230 from entering stimuli chamber 242, but allowing subject 230 to reach one or more limbs into stimuli chamber 242 to interact with objects in stimuli chamber through the openings. The one or more openings may be adjustable to customize cognitive assessment and training apparatus 200 to a specific subject 230. In one or more embodiments, divider 208 is made of one or more vertical or horizontal bars of metal, wood, plastic, acrylic or any other material suitable for providing a partial physical barrier between subject chamber 240 and stimuli chamber 242. Divider 208 may be secured in cognitive assessment and training apparatus 200 using rails, tracks, screws, bolts, or any other means of securing divider 208. In one or more embodiments, divider 208 is removably secured for portability and ease of transportation. Cognitive assessment and training apparatus 200 may include a track, guide, hinge, and/or any other means for facilitating moving, insertion and/or removal of at least one barrier of divider assembly 104.

Cognitive assessment and training apparatus 200 further includes transparent barrier 210. In a first position, transparent barrier 210 acts as a complete physical barrier but allows subject 230 to visually observe stimuli chamber 242 through transparent barrier 210. Transparent barrier 210 is movable to a second position during a cognitive assessment and training session, allowing subject 230 to access stimuli chamber 242 after transparent barrier 210 is removed from the first position. Transparent barrier 210 may be moved from the first position to the second position along a vertical axis of movement 212, a rotational movement 213, or any other direction.

Cognitive assessment and training apparatus 200 further includes adjustable subject platform 214. The position, including the height, of adjustable subject platform 214 is adjustable along an axis of movement 216 to accommodate subjects of different sizes. Adjustable subject platform 214 may be positioned using any manual or powered means for adjusting a platform height. In one or more embodiments, adjustment of a platform angle, orientation, position, and any other platform adjustment is provided.

Subject chamber 240 is designed to hold subject 230. Subject 230 is at least partially isolated from an external environment when subject 230 is held in subject chamber 240. Isolation includes physical restraint and/or sensory isolation. As used herein, the term sensory isolation refers to the blocking of sound, vision, smell, climate, and other environmental factors. In one or more embodiments, cognitive assessment and training apparatus 200 further includes a background sensory noise generator. The background sensory noise generator generates background sensory noise, such as background sound, light, or other sensory noise that further isolates the environment inside subject chamber 240 from the external environment.

Subject 230 is an animal subject, including a domesticated animal, such as a household animal, a companion animal, a service animal, or any other type of domesticated animal. In one or more embodiments of the apparatus for cognitive assessment and training, the animal subject is a canine. The animal subject may also be selected from other animals, such as dogs, horses, birds and cats, or any other animal. The size of subject chamber 240 is suitable for holding the subject 230 in a natural position, such as a natural standing position of subject 230. Subject 230 is positioned in subject chamber 240 to face stimuli chamber 242. Subject chamber 240 may include one or more mechanisms to focus the attention of subject 230 toward stimuli chamber 242, including light, restraints on movement, opaque panels, leashes, straps, or any other device.

Stimuli chamber 242 is accessible via stimuli chamber access port 244. Stimuli chamber access port 244 provides access to stimuli chamber 242. Stimuli chamber access port 244 may be used by a person to manipulate object in stimuli chamber 242 in accordance to methods for cognitive assessment and training of an animal. In one or more embodiments, at least one of side panels 140-146 and divider assembly 104 configured block subject 230 from viewing, hearing, or otherwise sensing the person's movements, expressions, or other characteristics.

Cognitive assessment and training apparatus 200 may also be configured to present one or more non-visual stimuli. For example, at least one speaker may be configured to produce audible stimuli, and objects used as stimuli 228 may be differentiated by odor applied to the objects produce olfactory stimuli.

Stimuli chamber access port 244 is configured to receive a trial assembly 250 configured to display a plurality of stimuli 228. A target stimuli selected from the plurality of stimuli 228 is associated with a reward 224. Reward 224 includes a food reward, a toy, a sentimental object, or any other reward of interest to subject 230. Trial assembly 250 is configured to allow for replacement of the plurality of stimuli 228 and changing of the target object associated with reward 224.

In one or more embodiments, trial assembly 250 includes a removable tray 218. Tray 218 includes a plurality of wells 222. Wells 222 may be formed in tray 218 by carving, molding, laminating, or any other method for manufacturing a tray with a plurality of wells. The plurality of stimuli 228 include objects configured for placement over wells 222. At least one well 222 contains reward 224 associated with a target stimuli. Tray 218 is placed within stimuli chamber 242 through stimuli chamber access port 244. In one or more embodiments, tray 218 is placed into stimuli chamber 242 through stimuli chamber access port 244 with a horizontal movement 220. Receiving member 226 is configured to receive tray 218. Receiving member 226 may include any combination of platforms, shelves, pegs, rails, or any other object configured to receive and/or align tray 218. At least one component of receiving member 226 may be manufactured to be fixedly coupled with at least one of side panels 140-146.

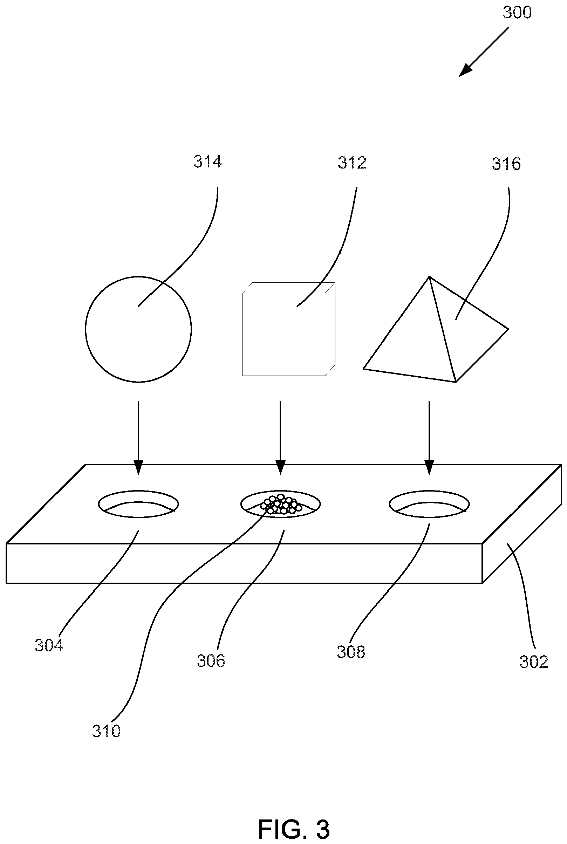

**FIG. 3** illustrates a trial assembly in accordance with one or more embodiments of systems and methods for cognitive assessment and training of an animal. Trial assembly 300 includes tray 302. Tray 302 includes a plurality of wells 304-308. Wells 304-308 may be formed in tray 302 by carving, molding, laminating, or any other method for manufacturing a tray with a plurality of wells. Although three wells 304-308 are shown, any number of wells may be used without departing from the spirit and scope of the invention. For example, the number of wells may be determined based on one or more factors, such as the type of animal subject, known cognitive issues of the subject, and any other factor.

A reward 310 is placed in at least one of wells 304-308. Reward 310 includes a food reward, a toy, a sentimental object, or any other reward of interest to a test subject. Reward 310 may be placed in a different well selected from wells 304-308 in different trials during a session. Stimuli 312-316 are objects configured for placement over a well to conceal reward 310. Target stimuli 312 is placed over well 306 containing reward 310. Cognitive assessment and training is based on the correct identification of the target stimuli 312 by a subject.

In one or more embodiments, the trial assembly 300 presented to a canine subject includes tray 302 with three wells 304-308, with one well 306 containing reward 310. Stimuli 312-316 includes three objects selected out of 21 possible objects using a randomized process. One of ordinary skill in the art will recognize that any number of objects may be selected out of any possible number of objects based on the type of animal subject, known cognitive issues of a subject, and any other factor without departing from the spirit and scope of the invention. The position of the food reward may also be varied according to a random process.

The trial assembly 300 may be presented to a subject in a testing environment in multiple trials over multiple sessions. The testing environment may include a subject chamber configured to receive the subject and to reduce at least one external stimuli. In one or more embodiments, the subject advances through increasingly complex cognitive test levels based on learning criteria. The learning criterion may be tailored to each level for each subject. In one or more embodiments, a learning criterion of nine correct responses out of the last ten trials is used. The number of errors made by the subject before reaching the criterion may be used as a parameter to determine the learning rate.

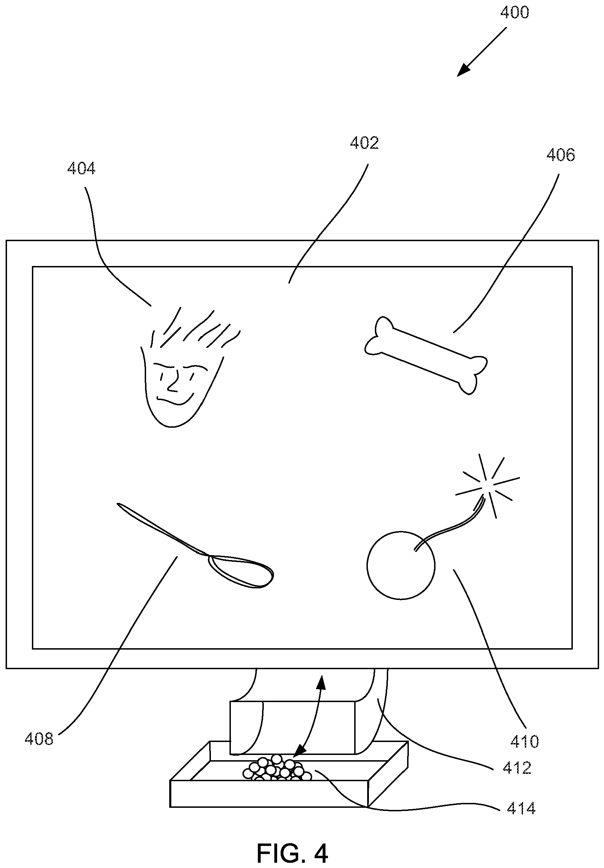

**FIG. 4** illustrates an automated stimulus system in accordance with one or more embodiments of systems and methods for cognitive assessment and training of an animal. Automated stimulus system 400 is configured to present stimuli to a subject in a subject chamber. In one or more embodiments, automated stimulus system 400 is configured to perform all functions served by trial assembly 250 and may replace at least one element of trial assembly 250. In one or more embodiments, automated stimulus system 400 is configured to perform all functions served by stimuli chamber 102 and divider assembly 104, such as automatic gating. One of ordinary skill in the art would recognize that embodiments of systems and methods for cognitive assessment and training which include an automated stimulus system may leave out the divider assembly and stimuli chamber without departing from the sphere and the scope of the invention. For example, automated stimulus system 400 may be utilized with or without a subject chamber, such as in any other testing environment.

Automated stimulus system 400 includes display 402. Display 402 is configured to display one or more visual stimuli 404-410. Automated stimulus system 400 may also be used to present one or more non-visual stimuli. For example, automated stimulus system 400 may further include at least one speaker configured to produce audible stimuli. Automated stimulus system 400 may also be configured to produce olfactory stimuli, such as by presenting physical objects possessing a target odor, or by releasing synthetic and/or natural fragrances.

In one or more embodiments, display 402 is a touch-screen interface. The subject may be trained to activate automated stimulus system 400 through the touch-screen interface to select the displayed visual stimuli 404-410 to receive a reward. After a subject is trained to use the touch-screen interface, display 402 may be configured to record touch-based input of the subject.

In one or more embodiments, automated stimulus system 400 further includes one or more sensors configured to record reaction data of a subject in the cognitive assessment and training apparatus. Sensors may include blood oximeter sensors, heart rate sensors, blood pressure sensors, position sensors, scales, pressure plates, microphones, or any other sensor capable of collecting reaction data of the subject, such as blood oxygen levels, heart rate, blood pressure, posture, movement, vocalizations, and any other reaction data. In one or more embodiments, automated stimulus system 400 is further configured to provide biometric feedback based on data provided by at least one sensor, where the ability of the subject to control one or more reactions is rewarded.

Automated stimulus system 400 further includes reward dispenser 412. Reward dispenser 412 is configured to dispense a reward 414 when a correct response from the subject is processed. The correct response may be automatically detected by automated stimulus system 400, such as by a touch-screen interface, or manually inputted by an observer. In one or more embodiments, automated reward system 400 or any other reward system associated with one or more embodiments of systems and methods for cognitive assessment and training of an animal may be located in any position of a cognitive assessment and training apparatus, such as cognitive assessment and training apparatus 100, 200 and any cognitive assessment and training apparatus utilizing automated stimulus system 400.

In one or more embodiments, automated stimulus system 400 is further configured to deliver an auditory, visual, or other sensory signal to indicate that a correct response has been received from the subject. An auditory visual, or other sensory signal may also indicate that an incorrect response has been received from the subject. For example, automated stimulus system 400 may be configured to generate a first noise corresponding to a correct response when a correct response is received from the subject, and to generate a second noise corresponding to an incorrect response when an incorrect responses received from the subject.

In one or more embodiments, automated stimulus system 400 is further configured to deliver a negative reward when an incorrect response from the subject is processed. The incorrect response may be automatically detected by automated stimulus system 400, such as by a touch-screen interface, or manually inputted by an observer. The negative reward includes any unpleasant sensory experience for the subject, including but not limited to an unpleasant sound, brightness, odor, or physical sensation, such as an electric shock. Automated stimulus system 400 may be further configured to monitor one or more reactions of the subject to the negative reward to monitor the safety and efficacy of the negative reward. In one or more embodiments, the negative reward is light or omitted altogether when a likely operator of the automated stimulus system 400 does not have suitable training or experience. In one or more embodiments, the inclusion or use of the negative reward in the cognitive assessment and training apparatus is restricted to the training of service animals.

In one or more embodiments, an automated stimulus system is used to automatically execute each session, including the proper randomization of the stimuli during each trial. The automated stimulus system may further be configured to automatically record data and calculate a learning rate and other statistical indicators. These calculations may be based on a learning criterion, other rules, subject accuracy, subject response time, and any other data recordable by the automated stimulus system. Alternatively, trials may be manually executed, and session and trial data may be collected and entered by an operator administering the test, such as a researcher, veterinarian, trainer, owner, or any other operator.

In one or more embodiments, the automated stimulus system is used to rate one or more subjects based on performance in accordance with the described systems and methods for cognitive assessment and training. In one or more embodiments, a qualification threshold is used to determine suitability of the subject for a particular purpose. The qualification threshold may be based on at least one of cognitive ability, learning rate, or any other objective measurement produced based on one or more sessions. For example, the qualification threshold may be used to determine acceptance of the subject into a specialized training program, such as a service animal training program. The suitability of the subject for a particular purpose may also be based on subject response during one or more sessions, including reaction data collected by one or more sensors.

### Training Levels

A preliminary level may be used to acclimate the subject to the apparatus for cognitive assessment and training. During a preliminary level session, a subject acclimates to a testing environment. In one or more embodiments, the subject acclimates to containment within a subject chamber and the reduction of external stimuli.

A reward level may be used to acclimate the subject to the cognitive assessment and training method. During a reward level session, the subject is presented with multiple reward trials. In each reward trial, the reward is presented through the standard method of delivery used by the cognitive assessment and training apparatus. In one or more embodiments, a reward trial includes presenting a multi-well tray to the subject with one well containing a food reward.

An object level may be used for cognitive assessment and training associating any object selection with a reward. During an object level session, the subject is presented with multiple object trials. In each object trial, a stimulus is presented to the subject, and the subject earns the reward by selecting the stimuli. In one or more embodiments, an object trial includes presenting a multi-well tray to the subject with a randomized object covering one well containing a food reward.

A discrimination level may be used for cognitive assessment and training associating a specific object with a reward. During a discrimination level session, the subject is presented with multiple discrimination trials. In each discrimination trial, two or more stimuli are presented to the subject, and the subject earns the reward by selecting the correct stimuli associated with the reward. In one or more embodiments, a discrimination trial includes presenting a multi-well tray to the subject with multiple objects covering two or more wells, where one covered well underneath the target object contains the food reward.

A reversal level may be used for cognitive assessment and training to disassociate a previously learned association between a reward and a specific object. During a reversal level session, the subject is presented with multiple reversal trials. In each reversal trial, two or more stimuli are presented to the subject, where selection of a first stimuli was previously rewarded. The subject earns the reward by selecting a second stimuli that was previously unrewarded. In one or more embodiments, a reversal trial includes presenting a multi-well tray to the subject with multiple objects covering two or more wells, where one covered well underneath a previously unrewarded object contains the food reward.

Each level may be further divided into multiple levels based on complexity, such as the number of possible stimuli and the number of stimuli presented to the subject in each trial.

One or more embodiments include one or more skill-oriented cognitive assessment and training levels. Skill-oriented cognitive assessment and training levels may be directed to memory, attention, commands, odors, search, control, visual tracking, and/or any other desirable skill that may be developed and/or assessed in a subject. Skill-oriented cognitive assessment and training levels may utilize specialized stimuli based on the skill. The stimuli may be presented with increasing levels of difficulty to develop one or more skills and/or to perform cognitive assessment with regard to one or more skills.

One or more embodiments include one or more target training levels. In one or more target training levels, speed, accuracy and other factors may be measured. Objects, such as object displayed on an automated stimuli system, may appear with increasing difficulty for target training, such as an increase in speed, a decrease in size, an increase in distraction objects displayed, and any other factor.

### Methods

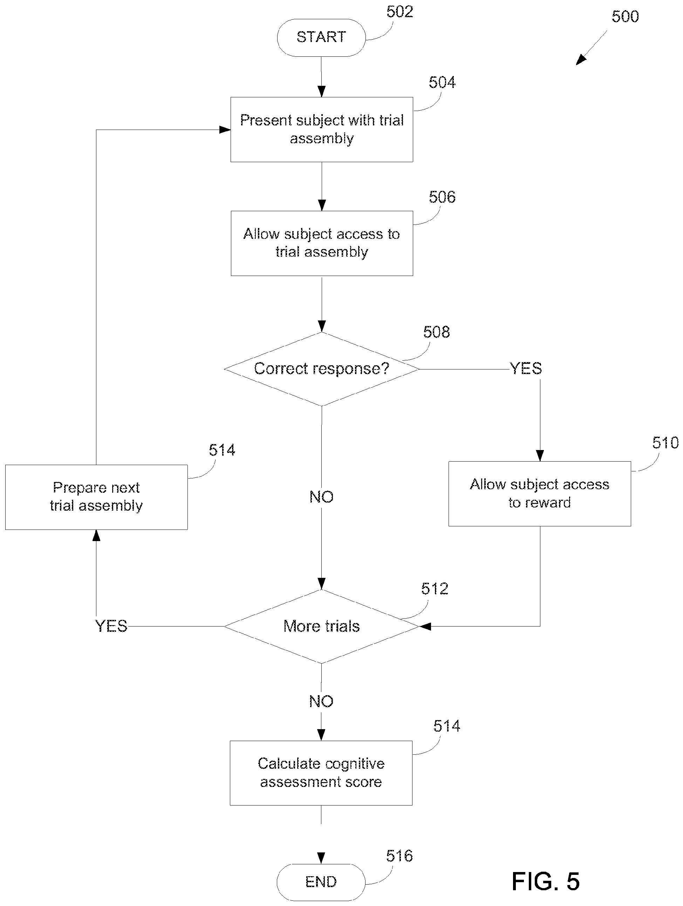

**FIG. 5** illustrates methods in accordance with systems and methods for cognitive assessment and training of an animal. Process 500 describes one or more embodiments of a cognitive assessment and training session. As used herein, the term "cognitive assessment and training session" refers to the session as described, performed for any purpose, including assessment or training, or any combination thereof. A cognitive assessment and training session may be conducted at a training level, such as a preliminary level, a reward level, an object level, at discrimination level, a reversal level, or any other level based on complexity. Each cognitive assessment and training session includes a plurality of trials. A session may end after a set number of trials, or upon the reaching of a learning criterion. Process 500 begins at step 502.

Processing continues at step 504, where a subject is presented with a trial assembly. The trial assembly is configured to display a plurality of stimuli. In one or more embodiments, the subject is a canine subject, and the stimuli are selected out of 21 possible stimuli using a randomized process. Any number of objects may be selected out of any possible number of objects based on the type of animal subject, known cognitive issues of a subject, and any other factor without departing from the spirit and scope of the invention. One target stimulus is associated with a positive reward, such as a food reward, a toy, a sentimental object, or any other reward of interest to the subject.

In one or more embodiments, an auditory, visual, or other sensory signal is generated when a correct response has been received from the subject. An auditory visual, or other sensory signal may also be generated when an incorrect response has been received from the subject. For example, a first signal may be generated corresponding to a correct response when a correct response is received from the subject, and a second signal may be generated corresponding to an incorrect response when an incorrect response is received from the subject. In one or more embodiments, a correct response sound is generated to indicate a correct response and an incorrect response sound is generated to indicate an incorrect response.

In one or more embodiments, a negative reward is associated with incorrect stimuli other than the target stimulus. The negative reward includes any unpleasant sensory experience for the subject, including but not limited to an unpleasant sound, brightness, odor, or physical sensation, such as an electric shock. In one or more embodiments, the negative reward is light or omitted altogether when a likely operator does not have suitable training or experience. Depending on the severity of the negative reward, t use of the negative reward in the cognitive assessment and training apparatus may be restricted to the training of service animals.

The trial assembly may include at least one of a multi-well tray, a reward, and at least one stimulus object that is manually prepared in a trial arrangement. The trial arrangement of the objects in the reward may be randomized using computer-generated randomization data. In one or more embodiments, the trial assembly is presented using an automated stimulus system configured to present stimuli to the subject.

Processing continues to step 506, where the subject is allowed access to the trial assembly when the trial has started. In one or more embodiments, a barrier or a restraint is removed to allow the subject access to the trial assembly. In one or more embodiments, the subject has access to the trial assembly during the entire process, but no reward and/or a negative reward is given if the subject attempts to access the trial assembly before a proper time. The proper time may be based on the completion of setup of the trial assembly, a signal to the subject indicating the trial has started, or any other method for determining a time that is appropriate for the subject to access the trial assembly.

Processing continues to decision step 508, where it is determined whether or not the subject has given a correct response to the trial. In one or more embodiments, a subject is determined to have given an incorrect response if the subject does not make a response within a trial time period.

The correct response may be based on the trial type. For example, during a reward level trial, a correct response includes acknowledging the reward. When the reward is a food reward, the correct response includes consuming the food reward. In one or more embodiments, the reward is presented in a well of the multi-well tray. The reward may also be presented manually by an operator, in a dispenser activated by the operator, a dispenser activated by a computer, or any other method for providing the reward.

During an object level trial, a correct response includes selecting the stimulus presented to obtain the reward. The reward may be obtained by displacing a stimulus, where the stimulus is an object placed over the reward to conceal the reward. The reward may also be obtained by activating an electronic sensor, including a touch-screen interface to cause the dispensing of the reward. The electronic sensor may also be a position sensor, an audio sensor, or any other sensor the subject may activate to indicate selection of the stimulus.

During a discrimination level trial, a correct response includes selecting a correct stimulus from two or more presented stimuli. The reward may be obtained by displacing a target stimulus, where the target stimulus is a target object placed over the reward to conceal the reward. The reward may also be obtained by activating an electronic sensor, including a touch-screen interface, to cause the dispensing of the reward by indicating selection of the target stimulus. The electronic sensor may also be a position sensor, an audio sensor, or any other sensor the subject may activate to indicate selection of the stimulus.

During a reversal level trial, a correct response includes selecting a correct stimulus from two or more presented stimuli, where the correct stimulus was previously unrewarded, and a different stimuli selected from the two or more presented stimuli was previously rewarded. The reward may be obtained by displacing a previously unrewarded target stimulus, where the target stimulus is a target object placed over the reward to conceal the reward. The reward may also be obtained by activating an electronic sensor, including a touch-screen interface, to cause the dispensing of the reward by indicating selection of the previously unrewarded target stimulus. The electronic sensor may also be a position sensor, an audio sensor, or any other sensor the subject may activate to indicate selection of the previously unreported target stimulus.

If the correct response is given at step 508, processing continues at step 510, where the subject is allowed access to the reward. Otherwise, processing continues directly to decision step 512.

At decision step 512, it is determined whether more trials should be performed in the cognitive assessment and training session. This decision is based on at least one of a total time elapsed, subject performance, a learning criterion, a number of trials, a number of correct responses, a number of errors, or any other factor relevant to the termination of the cognitive assessment and training session. In one or more embodiments, a session lasts for a fixed duration or a fixed number of trials. The subject may be advanced to trials at the next level when a learning criterion is reached within a single session. The subject may also complete a session at a level, advancing to the next level for the next session.

If more trials should be performed, processing continues to step 514, where the next trial assembly is prepared. In one or more embodiments, an automated stimulus system automatically generates the next trial assembly. Alternatively, the next trial assembly is assembled manually. The next trial assembly may be generated or assembled using randomization techniques. Processing returns to step 504, and steps 504-512 are repeated.

Returning to decision step 512, if no more trials should be performed, processing continues to step 516, where a cognitive assessment score is calculated. A cognitive assessment score may be provided at the end of each session or at the completion of multiple sessions. Progressive score data may also be calculated using data from previous sessions.

In one or more embodiments, a complete assessment including multiple repeated trials at the preliminary level, reward level, object level, discrimination level and reversal level are performed over about 2-3 sessions of about 30-60 minutes each. In one or more embodiments, the cognitive assessment score is based on at least one cognitive assessment and training session of between about 10 minutes to about 180 minutes. After these sessions, at least one cognitive assessment score is generated. The at least one cognitive assessment score may include an intelligence score, a learning rate score, and other cognitive ability scores. Each score may be further broken down into subcomponents. Calculations may also be provided based on a learning criterion, other rules, subject accuracy, subject response time, and any other recordable data.

In one or more embodiments, a computerized system is used to compute statistical data regarding cognitive assessment. A formula may also be provided to compute one or more cognitive assessment scores manually.

Processing continues to step 518, where process 500 terminates.

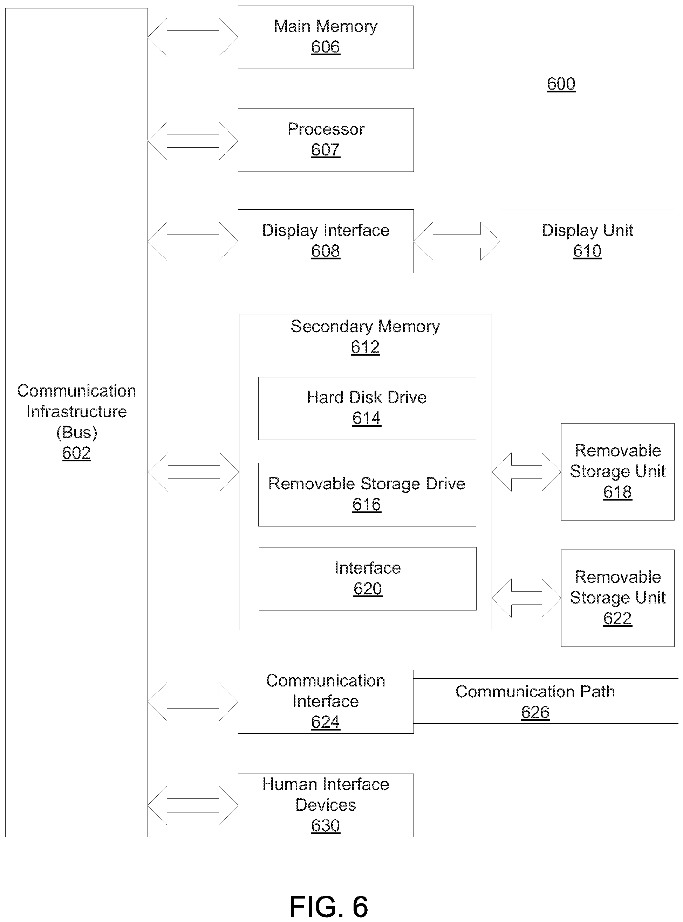

**FIG. 6** illustrates a general-purpose computer and peripherals, when programmed as described herein, may operate as a specially programmed computer capable of implementing one or more methods, apparatus and/or systems of the solution described in this disclosure. Processor 607 may be coupled to bi-directional communication infrastructure 602 such as Communication Infrastructure System Bus 602. Communication Infrastructure 602 may generally be a system bus that provides an interface to the other components in the general-purpose computer system such as Processor 607, Main Memory 606, Display Interface 608, Secondary Memory 612 and/or Communication Interface 624.

Main memory 606 may provide a computer readable medium for accessing and executed stored data and applications. Display Interface 608 may communicate with Display Unit 610 that may be utilized to display outputs to the user of the specially- programmed computer system. Display Unit 610 may comprise one or more monitors that may visually depict aspects of the computer program to the user. Main Memory 606 and Display Interface 608 may be coupled to Communication Infrastructure 602, serving as the interface point to Secondary Memory 612 and Communication Interface 624. Secondary Memory 612 may provide additional memory resources beyond main Memory 606, and may generally function as a storage location for computer programs to be executed by Processor 607. Either fixed or removable computer-readable media may serve as Secondary Memory 612. Secondary Memory 612 may comprise, for example, Hard Disk 614 and Removable Storage Drive 616 that may have an associated Removable Storage Unit 618. There may be multiple sources of Secondary Memory 612 and systems implementing the solutions described in this disclosure may be configured as needed to support the data storage requirements of the user and the methods described herein. Secondary Memory 612 may also comprise Interface 620 that serves as an interface point to additional storage such as Removable Storage Unit 622. Numerous types of data storage devices may serve as repositories for data utilized by the specially programmed computer system. For example, magnetic, optical or magnetic-optical storage systems, or any other available mass storage technology that provides a repository for digital information may be used.

Communication Interface 624 may be coupled to Communication Infrastructure 602 and may serve as a conduit for data destined for or received from Communication Path 626. A Network Interface Card (NIC) is an example of the type of device that once coupled to Communication Infrastructure 602 may provide a mechanism for transporting data to Communication Path 626. Computer networks such Local Area Networks (LAN), Wide Area Networks (WAN), Wireless networks, optical networks, distributed networks, the Internet or any combination thereof are some examples of the type of communication paths that may be utilized by the specially program computer system. Communication Path 626 may comprise any type of telecommunication network or interconnection fabric that can transport data to and from Communication Interface 624.

To facilitate user interaction with the specially programmed computer system, one or more Human Interface Devices (HID) 630 may be provided. Some examples of HIDs that enable users to input commands or data to the specially programmed computer may comprise a keyboard, mouse, touch screen devices, microphones or other audio interface devices, motion sensors or the like, as well as any other device able to accept any kind of human input and in turn communicate that input to Processor 607 to trigger one or more responses from the specially programmed computer are within the scope of the system disclosed herein.

While FIG. 6 depicts a physical device, the scope of the system may also encompass a virtual device, virtual machine or simulator embodied in one or more computer programs executing on a computer or computer system and acting or providing a computer system environment compatible with the methods and processes of this disclosure. Where a virtual machine, process, device or otherwise performs substantially similarly to that of a physical computer system, such a virtual platform will also fall within the scope of disclosure provided herein, notwithstanding the description herein of a physical system such as that in FIG. 6.

One or more embodiments are configured to enable the specially programmed computer to take the input data given and transform it into a web-based UI by applying one or more of the methods and/or processes described herein. Thus the methods described herein are able to transform a stored component into a web UI, using the solution disclosed here to result in an output of the system as a web UI design support tool, using the specially programmed computer as described herein.

While the invention herein disclosed has been described by means of specific embodiments and applications thereof, numerous modifications and variations could be made thereto by those skilled in the art without departing from the scope of the invention set forth in the claims.

## Claims

1. An apparatus with a plurality of side panels (140-146, 202-204) detachably coupled to form a testing chamber (100, 200) configured to isolate an animal subject from at least one external stimuli and configured for cognitive assessment and training of an animal subject (108, 230), the apparatus **characterized by**
a trial assembly (300, 400) comprising a display device (402) configured to display a plurality of stimuli, wherein at least one target stimuli selected from the plurality of stimuli is associated with a reward, wherein the trial assembly is further configured to allow for replacement of the plurality of stimuli and changing of a target object associated with the reward; and
a divider assembly (104, 208) detachably coupled with the plurality of side panels (144, 146) to divide the testing chamber into a stimuli chamber (102, 242) and a subject chamber (106, 240), wherein the trial assembly (300,400) is located in the stimuli chamber and the stimuli chamber (102, 242) is configured to prevent the animal subject (108, 230) from completely entering the stimuli chamber (102, 242), but allow the animal subject (108, 230) to reach into the stimuli chamber with one or more limbs to interact with objects in the stimuli chamber (102, 242).

2. The apparatus of claim 1, further comprising an adjustable subject platform (214) configured to movably couple with the plurality of side panels (142, 144, 146), wherein a height of the adjustable subject platform is adjustable along a vertical axis of movement.

3. The apparatus of claim 1 or 2, wherein the trial assembly comprises a tray (302) comprising a plurality of wells (304, 306, 308) configured to receive the reward (310), wherein the plurality of stimuli (312, 314, 316) comprise a plurality of objects each configured for placement over an individual well selected from the plurality of wells to cover the individual well, wherein the target stimuli comprises an object selected for placement over a well containing the reward.

4. The apparatus of any one of the preceding claims, wherein the divider assembly (208) comprises a plurality of bars and a transparent barrier (210) detachably coupled with the plurality of bars, wherein the transparent barrier (210) is further configured to move between a first position and a second position, wherein the transparent barrier (210) acts as a complete physical barrier between the subject chamber and the stimuli chamber in the first position, and wherein the animal subject has partial access to the stimuli chamber through the plurality of bars when the transparent barrier (210) is in the second position.

5. The apparatus of any one of the preceding claims, further comprising a reward dispenser (412) configured to dispense a reward to the animal subject, wherein the trial assembly (400) comprises a computerized display (402) configured to display the plurality of stimuli (404-410) on the computerized display.

6. The apparatus of any one of the preceding claims, wherein the animal subject is a canine.

7. The apparatus of any one of the preceding claims, wherein said trial assembly (400) comprises:
a display (402) located in said stimuli chamber and configured to display one or more visual stimuli (404-410), wherein the display is configurable to face the subject;
at least one processor (607);
a computer-readable medium (606) encoded with computer executable instructions, wherein execution of the computer-executable instructions by the at least one processor causes the apparatus to:
display a plurality of randomized trials to the animal subject on the display, the plurality of randomized trials comprising at least one stimuli associated with the reward;
determine a response from the animal subject for at least one of the plurality of randomized trials;
transmit a reward signal to the reward dispenser to dispense the reward when a correct response is determined; and
generate at least one cognitive assessment score based on the plurality of trials and the at least one cognitive assessment and training session,
wherein a level of the plurality of randomized trials displayed to the animal subject is advanced when a learning criterion is reached.

8. The apparatus of claim 7, wherein the level of the plurality of randomized trials is advanced through a series of levels based on the learning criterion, wherein the series of levels comprises:
a preliminary level, wherein the animal subject acclimates to a testing environment;
at least one reward level, wherein the correct response comprises acknowledging the reward presented;
at least one object level, wherein the correct response comprises selecting a stimulus presented to obtain the reward;
at least one discrimination level, wherein the correct response comprises selecting a target stimulus associated with the reward from two or more presented stimuli; and
at least one trial at a reversal level, wherein the correct response comprises selecting a target stimulus associated with the reward from two or more presented stimuli,
wherein the target stimulus was previously unrewarded, and a different stimuli selected from the two or more presented stimuli was previously rewarded.

9. The apparatus of claim 7 or 8, further comprising a negative reward mechanism configured to deliver a negative reward to the animal subject in response to a negative reward signal, wherein the computer-executable instructions further comprise transmitting the negative reward signal to the negative reward mechanism when an incorrect response is determined.

## Patentansprüche

1. Vorrichtung mit einer Vielzahl von Seitenpaneelen (140-146, 202-204), die lösbar gekoppelt sind, um einen Testraum (100, 200) zu bilden, konfiguriert zum Isolieren eines Tiersubjekts von mindestens einem Außenreiz und konfiguriert zur kognitiven Bewertung und zum kognitiven Training eines Tiersubjekts (108, 230), wobei die Vorrichtung durch Folgendes gekennzeichnet ist:
eine Versuchsanordnung (300, 400), umfassend eine Anzeigeeinrichtung (402), die zum Anzeigen einer Vielzahl von Reizen konfiguriert ist, wobei mindestens ein aus der Vielzahl von Reizen ausgewählter Zielreiz mit einer Belohnung assoziiert ist, wobei die Versuchsanordnung ferner konfiguriert ist, um den Austausch der Vielzahl von Reizen und das Ändern eines Zielobjekts, die mit der Belohnung assoziiert sind, zu ermöglichen; und
eine Trennanordnung (104, 208), die lösbar mit der Vielzahl von Seitenpaneelen (144, 146) gekoppelt ist, um den Testraum in einen Reizraum (102, 242) und einen Subjektraum (106, 240) zu trennen, wobei sich die Versuchsanordnung (300, 400) in dem Reizraum befindet und der Reizraum (102, 242) konfiguriert ist, zu verhindern,
dass das Tiersubjekt (108, 230) vollständig in den Reizraum (102, 242) eintritt, dem Tiersubjekt (108, 230) aber zu ermöglichen, mit einer oder mehreren Gliedmaßen in den Reizraum zu greifen, um mit Objekten in dem Reizraum (102, 242) zu interagieren.

2. Vorrichtung nach Anspruch 1, ferner umfassend eine verstellbare Subjektplattform (214), die zum bewegbaren Koppeln mit der Vielzahl von Seitenpaneelen (142, 144, 146) konfiguriert ist, wobei eine Höhe der verstellbaren Subjektplattform entlang einer vertikalen Bewegungsachse verstellbar ist.

3. Vorrichtung nach Anspruch 1 oder 2, wobei die Versuchsanordnung einen Einsatz (302) umfasst, der eine Vielzahl von Mulden (304, 306, 308) umfasst, die zum Aufnehmen der Belohnung (310) konfiguriert sind, wobei die Vielzahl von Reizen (312, 314, 316) eine Vielzahl von Objekten umfasst, die jeweils zur Positionierung über einer aus der Vielzahl von Mulden ausgewählten einzelnen Mulde konfiguriert sind, um die einzelne Mulde abzudecken, wobei der Zielreiz ein Objekt umfasst, das zur Positionierung über einer die Belohnung enthaltenden Mulde ausgewählt ist.

4. Vorrichtung nach einem der vorangehenden Ansprüche, wobei die Trennanordnung (208) eine Vielzahl von Stangen und eine mit der Vielzahl von Stangen lösbar gekoppelte transparente Barriere (210) umfasst, wobei die transparente Barriere (210) ferner zum Bewegen zwischen einer ersten Position und einer zweiten Position konfiguriert ist, wobei die transparente Barriere (210) in der ersten Position als eine vollständige physische Barriere zwischen dem Subjektraum und dem Reizraum wirkt und wobei das Tiersubjekt durch die Vielzahl von Stangen teilweise Zugang zu dem Reizraum hat, wenn sich die transparente Barriere (210) in der zweiten Position befindet.

5. Vorrichtung nach einem der vorangehenden Ansprüche, ferner umfassend einen Belohnungsausgeber (412), der zum Ausgeben einer Belohnung an das Tiersubjekt konfiguriert ist, wobei die Versuchsanordnung (400) eine computergesteuerte Anzeige (402) umfasst, die zum Anzeigen der Vielzahl von Reizen (404-410) auf der computergesteuerten Anzeige konfiguriert ist.

6. Vorrichtung nach einem der vorangehenden Ansprüche, wobei das Tiersubjekt ein Hund ist.

7. Vorrichtung nach einem der vorangehenden Ansprüche, wobei die Versuchsanordnung (400) Folgendes umfasst:
eine Anzeige (402), die sich in dem Reizraum befindet und zum Anzeigen eines oder mehrerer visueller Reize (404-410) konfiguriert ist, wobei die Anzeige konfigurierbar ist, dem Subjekt zugewandt zu sein;
mindestens einen Prozessor (607);
ein computerlesbares Medium (606), das mit computerausführbaren Anweisungen codiert ist, wobei die Ausführung der computerausführbaren Anweisungen durch den mindestens einen Prozessor die Vorrichtung zu Folgendem veranlasst:
Anzeigen einer Vielzahl von willkürlich ausgewählten Versuchen für das Tiersubjekt auf der Anzeige, wobei die Vielzahl von willkürlich ausgewählten Versuchen mindestens einen mit der Belohnung assoziierten Reiz umfasst;
Bestimmen einer Reaktion von dem Tiersubjekt für mindestens einen der Vielzahl von willkürlich ausgewählten Versuchen;
Übertragen eines Belohnungssignals an den Belohnungsausgeber zum Ausgeben der Belohnung, wenn eine korrekte Reaktion bestimmt wird; und
Erzeugen mindestens eines Werts der kognitiven Bewertung auf der Basis der Vielzahl von Versuchen und der mindestens einen kognitiven Bewertungs- und Trainingseinheit, wobei eine Stufe der Vielzahl von willkürlich ausgewählten Versuchen, die dem Tiersubjekt angezeigt werden, erhöht wird, wenn ein Lernkriterium erreicht ist.

8. Vorrichtung nach Anspruch 7, wobei die Stufe der Vielzahl von willkürlich ausgewählten Versuchen durch eine Reihe von Stufen auf der Basis des Lernkriteriums erhöht wird, wobei die Reihe von Stufen Folgendes umfasst:
eine Vorstufe, bei der sich das Tiersubjekt an eine Testumgebung gewöhnt;
mindestens eine Belohnungsstufe, bei der die korrekte Reaktion das Annehmen der präsentierten Belohnung umfasst;
mindestens eine Objektstufe, bei der die korrekte Reaktion das Auswählen eines Reizes, der präsentiert wird, umfasst, um die Belohnung zu erhalten;
mindestens eine Unterscheidungsstufe, bei der die korrekte Reaktion das Auswählen eines mit der Belohnung assoziierten Zielreizes aus zwei oder mehr präsentierten Reizen umfasst; und
mindestens einen Versuch bei einer Umkehrstufe, bei der die korrekte Reaktion das Auswählen eines mit der Belohnung assoziierten Zielreizes aus zwei oder mehr präsentierten Reizen umfasst, wobei der Zielreiz zuvor ohne Belohnung blieb und ein aus den zwei oder mehr präsentierten Reizen ausgewählter anderer Reiz zuvor belohnt wurde.

9. Vorrichtung nach Anspruch 7 oder 8, ferner umfassend einen negativen Belohnungsmechanismus, der konfiguriert ist, um als Reaktion auf ein negatives Belohnungssignal eine negative Belohnung an das Tiersubjekt auszugeben, wobei die computerausführbaren Anweisungen ferner das Übertragen des negativen Belohnungssignals an den negativen Belohnungsmechanismus, wenn eine falsche Reaktion bestimmt wird, umfassen.

## Revendications

1. Appareil ayant une pluralité de panneaux latéraux (140-146, 202-204) accouplés de manière détachable pour former une chambre d'essai (100, 200) configurée à des fins d'isolation d'un sujet animal par rapport à au moins une stimulation externe et configurée à des fins d'évaluation cognitive et de dressage d'un sujet animal (108, 230), l'appareil étant **caractérisé par**
un ensemble à épreuves (300, 400) comportant un dispositif d'affichage (402) configuré à des fins d'affichage d'une pluralité de stimulations, dans lequel au moins une stimulation cible sélectionnée parmi la pluralité de stimulations est associée à une récompense, dans lequel l'ensemble à épreuves est par ailleurs configuré pour permettre un remplacement de la pluralité de stimulations et un changement d'un objet cible associé à la récompense ; et
un ensemble de séparation (104, 208) accouplé de manière détachable à la pluralité de panneaux latéraux (144, 146) pour séparer la chambre d'essai en une chambre des stimulations (102, 242) et une chambre pour sujet (106, 240), dans lequel l'ensemble à épreuves (300, 400) est situé dans la chambre des stimulations et la chambre des stimulations (102, 242) est configurée pour empêcher le sujet animal (108, 230) d'entrer entièrement dans la chambre des stimulations (102, 242), mais permet au sujet animal (108, 230) de parvenir dans la chambre des stimulations au moyen d'un ou de plusieurs membres à des fins d'interaction avec des objets dans la chambre des stimulations (102, 242).

2. Appareil selon la revendication 1, comportant par ailleurs une plateforme ajustable pour sujet (214) configurée à des fins d'accouplement mobile avec la pluralité de panneaux latéraux (142, 144, 146), dans lequel une hauteur de la plateforme ajustable pour sujet est ajustable le long d'un axe de mouvement vertical.

3. Appareil selon la revendication 1 ou la revendication 2, dans lequel l'ensemble à épreuves comporte un plateau (302) comportant une pluralité de cuvettes (304, 306, 308) configurées à des fins de réception de la récompense (310), dans lequel les stimulations de la pluralité de stimulations (312, 314, 316) comportent une pluralité d'objets qui sont chacun configurés à des fins de positionnement sur une cuvette individuelle sélectionnée parmi la pluralité de cuvettes pour recouvrir la cuvette individuelle, dans lequel la stimulation cible comporte un objet sélectionné à des fins de positionnement sur une cuvette contenant la récompense.

4. Appareil selon l'une quelconque des revendications précédentes, dans lequel l'ensemble de séparation (208) comporte une pluralité de barres et une barrière transparente (210) accouplée de manière détachable à la pluralité de barres, dans lequel la barrière transparente (210) est par ailleurs configurée à des fins de déplacement entre une première position et une deuxième position, dans lequel la barrière transparente (210) tient lieu de barrière physique complète entre la chambre pour sujet et la chambre des stimulations dans la première position, et dans lequel le sujet animal a un accès partiel à la chambre des stimulations au travers de la pluralité de barres quand la barrière transparente (210) est dans la deuxième position.

5. Appareil selon l'une quelconque des revendications précédentes, comportant par ailleurs un distributeur de récompenses (412) configuré pour distribuer une récompense au sujet animal, dans lequel l'ensemble à épreuves (400) comporte un affichage informatisé (402) configuré à des fins d'affichage de la pluralité de stimulations (404-410) sur l'affichage informatisé.

6. Appareil selon l'une quelconque des revendications précédentes, dans lequel le sujet animal est un sujet canin.

7. Appareil selon l'une quelconque des revendications précédentes, dans lequel ledit ensemble à épreuves (400) comporte :
un affichage (402) situé dans ladite chambre des stimulations et configuré à des fins d'affichage d'une ou de plusieurs stimulations visuelles (404-410), dans lequel l'affichage est en mesure d'être configuré pour être orienté vers le sujet ;
au moins un processeur (607) ;
un support lisible par ordinateur (606) codé avec des instructions exécutables par ordinateur, dans lequel l'exécution des instructions exécutables par ordinateur par ledit au moins un processeur amène l'appareil à :
afficher une pluralité d'épreuves aléatoires à l'attention du sujet animal sur l'affichage, la pluralité d'épreuves aléatoires comportant au moins une stimulation associée à la récompense ;
déterminer une réponse du sujet animal pour au moins l'une de la pluralité d'épreuves aléatoires ;
transmettre un signal de récompense au distributeur de récompenses à des fins de distribution de la récompense quand une réponse correcte est déterminée ; et
générer au moins un score de l'évaluation cognitive en fonction de la pluralité d'épreuves et de ladite au moins une séance d'évaluation cognitive et de dressage,
dans lequel un niveau de la pluralité d'épreuves aléatoires affichées à l'attention du sujet animal passe à un niveau avancé quand un critère d'apprentissage est atteint.

8. Appareil selon la revendication 7, dans lequel le niveau de la pluralité d'épreuves aléatoires passe à un niveau avancé par une série de niveaux en fonction du critère d'apprentissage, dans lequel la série de niveaux comporte :
un niveau préliminaire, dans lequel le sujet animal s'acclimate à un environnement d'essai ;
au moins un niveau de récompense, dans lequel la réponse correcte comporte une reconnaissance de la récompense présentée ;
au moins un niveau d'objet, dans lequel la réponse correcte comporte la sélection d'une stimulation présentée pour obtenir la récompense ;
au moins un niveau de discrimination, dans lequel la réponse correcte comporte la sélection d'une stimulation cible associée à la récompense parmi deux stimulations présentées ou plus ; et
au moins une épreuve à un niveau d'interversion, dans lequel la réponse correcte comporte la sélection d'une stimulation cible associée à la récompense parmi deux stimulations présentées ou plus, dans lequel la stimulation cible a été non récompensée précédemment, et une stimulation différente sélectionnée parmi les deux stimulations présentées ou plus a été récompensée précédemment.

9. Appareil selon la revendication 7 ou la revendication 8, comportant par ailleurs un mécanisme de récompense négative configuré à des fins de distribution d'une récompense négative au sujet animal en réponse à un signal de récompense négative, dans lequel les instructions exécutables par ordinateur comportent par ailleurs la transmission du signal de récompense négative au mécanisme de récompense négative quand une réponse incorrecte est déterminée.
